# EUROPÄISCHE PATENTSCHRIFT

(11) **EP 1 192 070 B1**
(45) Veröffentlichungstag und Bekanntmachung des Hinweises auf die Patenterteilung: **14.05.2003**
(21) Anmeldenummer: 00943928.2
(22) Anmeldetag: 28.06.2000
(51) Int. Cl.: B60T 8/38, B60T 8/48, B60T 11/16, B60T 13/16

(54) **HAUPTZYLINDERANORDNUNG**
MASTER CYLINDER ARRANGEMENT
CONCEPTION DE MAITRE-CYLINDRE

(30) Priorität: 13.07.1999 DE 19932670
(43) Veröffentlichungstag der Anmeldung: 03.04.2002
(73) Patentinhaber: LUCAS INDUSTRIES PUBLIC LIMITED COMPANY, Solihull B90 4LA (GB)
(72) Erfinder: DIERINGER, Werner, D-56179 Vallendar (DE)
(74) Vertreter: Beyer, Andreas, Dr.
(86) Internationale Anmeldenummer: EP0006032
(87) Internationale Veröffentlichungsnummer: WO01003988

(56) Entgegenhaltungen:
- WO-A-98/47749
- DE-A- 1 800 633
- DE-A- 2 459 776
- DE-A- 3 209 337
- DE-A- 4 443 869
- DE-A- 19 620 228

## Beschreibung

Die Erfindung betrifft eine Hauptzylinderanordnung für eine hydraulische Fahrzeugbremsanlage gemäß dem Oberbegriff des Patentanspruchs 1.

Eine solche Hauptzylinderanordnung ist aus der DE 196 20 228 A1 bekannt. Der dort beschriebene Hauptzylinder ist zur Verwendung mit einem vorgeschalteten Bremskraftverstärker bestimmt, der fahrerunabhängig betätigbar ist, um einen Betrieb der Bremsanlage auch ohne die Fußkraft des Fahrers zu ermöglichen. Nur so lassen sich Funktionen wie beispielsweise eine Antriebsschlupfregelung oder eine Fahrdynamikregelung realisieren, bei denen einzelne Fahrzeugräder ohne eine Bremsbetätigung des Fahrers abgebremst werden müssen. Damit im Rahmen solcher Funktionen eine genügend hohe Bremskraft zur Verfügung steht, ist die Druckübersetzung des in der DE 196 20 228 A1 beschriebenen Hauptzylinders umschaltbar. Um eine Verlängerung des Pedalweges zu vermeiden, zu der es in der Stellung der größeren Druckübersetzung aufgrund der kleineren hydraulischen Wirkfläche kommt, pumpt eine Hydraulikpumpe Bremsfluid aus einer Füllkammer in einen einer ersten Druckkammer zugeordneten ersten Bremskreis. Zur Verwendung ohne einen vorgeschalteten Bremskraftverstärker ist die Hauptzylinderanordnung gemäß der DE 196 20 228 A1 nicht vorgesehen und auch nicht geeignet.

Der Erfindung liegt die Aufgabe zugrunde, eine einfach aufgebaute Hauptzylinderanordnung für eine hydraulische Fahrzeugbremsanlage bereitzustellen, die ohne einen vorgeschalteten Bremskraftverstärker betrieben werden kann und die ein Verhalten zeigt, daß dem üblicher Bremskraftverstärker/Hauptzylinder-Einheiten entspricht.

Diese Aufgabe ist aufbauend auf einer Hauptzylinderanordnung der eingangs genannten Art erfindungsgemäß dadurch gelöst, daß der Füllkolben und der erste Druckkolben um ein begrenztes Maß längs ihrer gemeinsamen Hauptachse relativ zueinander bewegbar sind, wobei der Füllkolben und der erste Druckkolben in bezug aufeinander federnd so vorgespannt sind, daß sie auseinander gedrängt werden, und wobei der Füllkolben und der erste Druckkolben starr miteinander koppeln, nachdem sie gegen die sie auseinanderdrängende Federkraft um das genannte Maß aufeinanderzubewegt worden sind.

Auf diese Weise wird erreicht, daß die Betätigungskraft in der Anfangsphase einer Bremsung niedrig ist, weil zunächst nur der Füllkolben relativ zum ersten Druckkolben verschoben wird und Fluid aus der Füllkammer zur Hydraulikpumpe verdrängt, die dieses Fluid dann dem ersten Bremskreis zuführt und dadurch dort den Druck entsprechend der aus der Füllkammer in den ersten Bremskreis geförderten Fluidmenge erhöht. Das bedeutet, daß in der Anfangsphase einer Bremsung die von einem Fahrer eingeleitete Betätigungskraft relativ hoch verstärkt wird, was dem Fahrer das Gefühl vermittelt, eine gut funktionierende, ausreichend dimensionierte Bremsanlage zu besitzen. Das genannte Verhalten der erfindungsgemäßen Hauptzylinderanordnung entspricht dem Verhalten herkömmlicher (Unterdruck)Bremskraftverstärker/Hauptzylinder-Einheiten, bei denen eine zwischen dem Bremskraftverstärker und dem Hauptzylinder angeordnete, sogenannte Reaktionsscheibe aus federnd elastischem Material im Zusammenwirken mit einer sogenannten Fühlscheibe dafür sorgt, daß die Verstärkung der eingeleiteten Betätigungskraft zu Beginn einer Betätigung deutlich höher als im späteren Verlauf einer Bremsung ist.

Zur Relativbewegung zwischen dem Füllkolben und dem ersten Druckkolben kommt es, weil aus der Füllkammer Fluid lediglich verschoben wird, die Füllkammer also drucklos bleibt, während sich in der ersten Druckkammer, die mit dem ersten Bremskreis fluidleitend verbunden ist, derjenige Druck einstellt, den die Hydraulikpumpe im ersten Bremskreis erzeugt, indem sie das durch die Bewegung des Füllkolbens aus der Füllkammer verdrängte Fluid in den ersten Bremskreis pumpt. Der erste Druckkolben bleibt demnach in der Anfangsphase einer Betätigung relativ zum Füllkolben stehen oder bewegt sich - bei steigendem Druck im ersten Bremskreis - sogar entgegen der Betätigungsrichtung auf den Füllkolben zu. Erst wenn im Zuge dieser Relativbewegung das erwähnte, begrenzte Maß überwunden worden ist, koppelt der erste Druckkolben starr mit dem Füllkolben, so daß diese beiden Kolben sich bei einer weiteren Verschiebung in Betätigungsrichtung wie ein einziger Kolben verhalten. Ab diesem Zeitpunkt wirkt über den ersten Druckkolben auch der in der ersten Druckkammer vorhandene Druck auf den Füllkolben zurück und wird somit dem Fahrer mitgeteilt. Eine weitere Bremsdruckerhöhung erfordert vom Fahrer jetzt eine größere Betätigungskraft, denn er muß den ersten Druckkolben gegen den in der ersten Druckkammer vorhandenen Druck verschieben. Zugleich wird jedoch bei einer weiteren, in Betätigungsrichtung erfolgenden Verschiebung des ersten Druckkolbens und des damit gekoppelten Füllkolbens auch weiteres Fluid aus der Füllkammer zur Hydraulikpumpe verdrängt, die dieses Fluid unter Druckerhöhung dem ersten Bremskreis zuführt. Nach wie vor wird demnach die vom Fahrer eingeleitete Betätigungskraft verstärkt, wenn auch nicht mehr mit einem so hohen Faktor wie zu Beginn einer Betätigung.

Bei einer bevorzugten Ausführungsform einer erfindungsgemäßen Hauptzylinderanordnung legt ein Anschlag eine Ruhestellung des ersten Druckkolbens fest, aus der er sowohl in Betätigungsrichtung als auch entgegen der Betätigungsrichtung verschiebbar ist. Eine in Betätigungsrichtung wirkende Feder drängt den ersten Druckkolben in Richtung des genannten Anschlages, sobald der erste Druckkolben aus seiner Ruhestellung entgegen der Betätigungsrichtung verschoben wird. Der Anschlag ist vorzugsweise so ausgeführt, daß er in der Ruhestellung des ersten Druckkolbens die Kraft der genannten Feder abfängt, so daß dann, wenn der erste Druckkolben sich in seiner Ruhestellung oder in einer in Betätigungsrichtung verschobenen Stellung befindet, die Kraft der genannten Feder nicht auf den ersten Druckkolben wirkt. Durch Bemessung der Federkraft der genannten Feder kann festgelegt werden, ab welchem in der ersten Druckkammer herrschenden Druck der erste Druckkolben mit dem Füllkolben koppelt. Gemäß einer Ausführungsform sind der Anschlag und die Feder in der ersten Druckkammer angeordnet. Alternativ kann die Feder auch zwischen dem Füllkolben und dem ersten Druckkolben angeordnet sein und damit zugleich als Rückstellfeder für den Füllkolben und den ersten Druckkolben dienen.

Ist die zuvor genannte Feder nicht zwischen dem Füllkolben und dem ersten Druckkolben angeordnet, dann ist vorzugsweise eine weitere Feder vorhanden, die den Füllkolben entgegen der Betätigungsrichtung vorspannt. Nach Beendigung einer Betätigung drückt diese Feder den Füllkolben dann wieder in seine Ausgangsstellung.

Der erste Druckkolben und der Füllkolben können gleich große hydraulisch wirksame Flächen aufweisen. Vorzugsweise ist jedoch die hydraulisch wirksame Fläche des ersten Druckkolbens kleiner als die hydraulisch wirksame Fläche des Füllkolbens, um beim Koppeln von Füllkolben und erstem Druckkolben einen zu großen Abfall des Verstärkungsfaktors zu vermeiden und um auch bei einem Ausfall der Hydraulikpumpe noch eine gewissen Mindestanforderungen genügende Druckübersetzung bereitzustellen.

Heutzutage übliche Fahrzeugbremssysteme haben nicht nur einen, sondern wenigstens zwei Bremskreise, so daß bei bevorzugten Ausführungsbeispielen der erfindungsgemäßen Hauptzylinderanordnung in der Bohrung des Hauptzylinders eine zweite Druckkammer begrenzt ist, in der sich ein zweiter Druckkolben befindet, der bei einer Verschiebung in druckaufbauender Richtung Fluid aus der zweiten Druckkammer in einen zweiten Bremskreis verdrängt.

Die in der erfindungsgemäßen Hauptzylinderanordnung eingesetzte Hydraulikpumpe, die nur das ihr zugeführte, aus der Füllkammer verdrängte Fluid in den ersten Bremskreis pumpt und die daher nicht selbstansaugend zu sein braucht, kann eine separate Pumpe sein, sie ist mit Vorteil jedoch die Pumpe eines Radschlupfregelsystems, das in immer mehr Fahrzeugen heutzutage serienmäßig vorhanden ist.

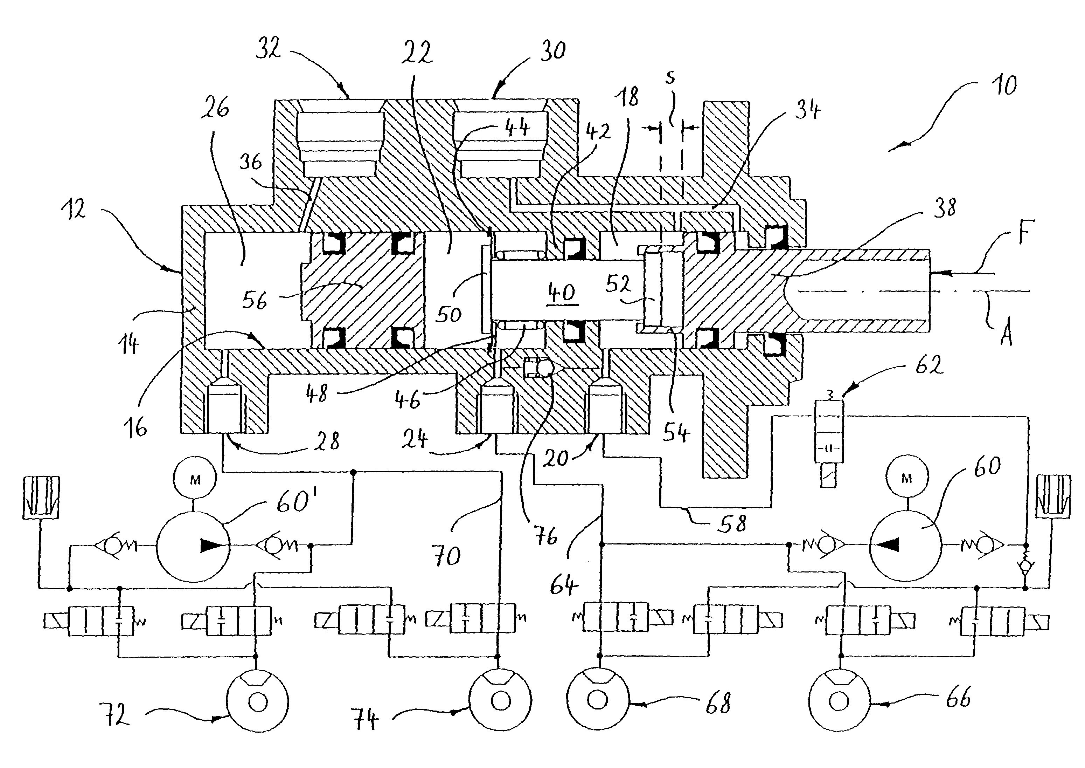

Ein Ausführungsbeispiel der erfindungsgemäßen Hauptzylinderanordnung wird im folgenden anhand der beigefügten schematischen einzigen Figur, die einen Längsschnitt zeigt, näher erläutert.

Die Figur zeigt eine Hauptzylinderanordnung 10 mit einem Hauptzylinder 12, in dessen Gehäuse 14 längs einer Achse A eine Bohrung 16 ausgebildet ist.

In der Bohrung 16 sind eine Füllkammer 18 mit einem Auslaß 20, eine von der Füllkammer 18 getrennte erste Druckkammer 22 mit einem Auslaß 24, und eine zweite Druckkammer 26 mit einem Auslaß 28 begrenzt. In betriebsfähigem Zustand des Hauptzylinders 12 sind die Füllkammer 18, die erste Druckkammer 22 und die zweite Druckkammer 26 vollständig mit Hydraulikfluid gefüllt, das aus einem nicht gezeigten Vorratsbehälter durch im Hauptzylindergehäuse 14 ausgebildete Anschlußöffnungen 30, 32 und Leitungen 34, 36 in die genannten Kammern 18, 20 und 22 gelangt.

In der Bohrung 16 ist des weiteren ein der Füllkammer 18 zugeordneter Füllkolben 38 abdichtend und verschiebbar geführt. Mit dem Füllkolben 38 verbunden ist ein der ersten Druckkammer 22 zugeordneter erster Druckkolben 40, der in einem durchmesserkleineren Abschnitt 42 der Bohrung 16 abdichtend und verschiebbar geführt ist. In der Praxis kann dieser durchmesserkleinere Abschnitt 42 auch als ein Führungsring ausgebildet sein, der in die Bohrung 16 eingesetzt ist und gegenüber der Bohrung 16 abdichtet.

Die in der Figur gezeigte Stellung des ersten Druckkolbens 40 stellt seine Ruhe- bzw. Ausgangsstellung dar, die durch einen Anschlag 44 in der ersten Druckkammer 22 festgelegt ist. Eine Druckfeder 46, die sich mit ihrem einen Ende am durchmesserkleineren Abschnitt 42 abstützt, drückt einen Ring 48, durch den sich der erste Druckkolben 40 erstreckt, gegen den Anschlag 44. An seinem freien Ende weist der erste Druckkolben 40 einen Ringbund 50 auf, dessen Außendurchmesser größer als der Durchmesser der im Ring 48 vorhandenen Öffnung ist.

An seinem anderen, dem Füllkolben 38 zugewandten Ende ist der erste Druckkolben 40 mit einem weiteren Ringbund 52 versehen, der von mehreren, hier einstückig mit dem Füllkolben 38 ausgebildeten Armen 54 umgriffen wird. Wie aus der Figur ersichtlich, bilden die Arme 54 eine Führung und einen Anschlag für den Ringbund 52, so daß der erste Druckkolben 40 sich relativ zum Füllkolben 38 längs der Achse A um ein Maß s verschieben läßt.

Schließlich ist in der Bohrung 16 des Hauptzylinders 12 noch ein hier als Schwimmkolben ausgeführter zweiter Druckkolben 56 abdichtend und verschiebbar geführt, der der zweiten Druckkammer 26 zugeordnet ist.

Der Auslaß 20 der Füllkammer 18 ist über eine Leitung 58 mit der Saugseite einer Hydraulikpumpe 60 fluidleitend verbunden. In der Leitung 58 befindet sich ein Ventil 62, dessen Zweck später noch näher erläutert wird.

Der Auslaß 24 der ersten Druckkammer 22 steht in fluidleitender Verbindung mit einem ersten Bremskreis 64, dem zwei Radbremsen 66, 68 zugeordnet sind. Die Druckseite der bereits erwähnten Hydraulikpumpe 60 ist ebenfalls fluidleitend mit dem ersten Bremskreis 64 verbunden.

Der Auslaß 28 der zweiten Druckkammer 26 steht in fluidleitender Verbindung mit einem zweiten Bremskreis 70, dem hier zwei weitere Radbremsen 72, 74 zugeordnet sind und in dem sich eine weitere Hydraulikpumpe 60' befindet. Allen Radbremsen 66, 68 und 72, 74 sind in der Figur dargestellte, jedoch nicht weiter erläuterte Magnetventile zugeordnet, wie dies bei radschlupfgeregelten Fahrzeugbremsanlagen üblich und Fachleuten auf diesem Gebiet daher bekannt ist.

Die Funktion der dargestellten Hauptzylinderanordnung 10 ist wie folgt: Wird über ein nicht dargestelltes Bremspedal eine Betätigungskraft F in den Füllkolben 38 eingeleitet, verschiebt sich dieser nach links und verdrängt Fluid aus der Füllkammer 18 durch den Auslaß 20 in die Leitung 58 zur Hydraulikpumpe 60. Das Ventil 62 befindet sich dabei in seiner Durchgangsstellung, die die Normalstellung darstellt. Im wesentlichen gleichzeitig mit dem Beginn der Betätigung des Hauptzylinders 12 durch Einleiten der Betätigungskraft F, feststellbar beispielsweise durch die Verschiebung des Füllkolbens 38, läuft die Hydraulikpumpe 60 an und fördert das aus der Füllkammer 18 verdrängte Fluidvolumen vollständig in den ersten Bremskreis 64, in dem sich daraufhin ein entsprechend erhöhter Druck einstellt. Dieser Druck pflanzt sich in die erste Druckkammer 22 fort, wo er auf den ersten Druckkolben 40 wirkt. Aufgrund des gegen den Anschlag 44 vorgespannten Rings 48, an dem sich der erste Druckkolben 40 mittels seines Ringbundes 50 abstützt, verändert der erste Druckkolben 40 seine Position zunächst nicht. Zu Beginn einer Bremsbetätigung verschiebt sich daher der Füllkolben 38 unter Verkleinerung des Abstandes s relativ zum ersten Druckkolben 40.

Im Verlaufe einer Bremsbetätigung steigt der Druck in der ersten Druckkammer 22 und übersteigt irgendwann die Kraft der Feder 46, die daraufhin komprimiert wird, so daß der erste Druckkolben 40 sich entgegen der Betätigungsrichtung auf den Füllkolben 38 zu bewegt und dadurch den Abstand s weiter verkleinert.

Steigt der Druck in der ersten Druckkammer 40 noch weiter, stößt der erste Druckkolben 40 - nach Überwinden des Spiels s - gegen den Füllkolben 38 und wird im Verlaufe der weiteren Betätigung durch die wirkenden Kräfte gegen den Füllkolben 38 gedrückt. Nach Überwindung des Abstandes s ist der Füllkolben 38 demnach mit dem ersten Druckkolben 40 gekoppelt und beide Kolben 38, 40 verhalten sich im weiteren Verlauf einer Bremsbetätigung wie ein einziger Kolben.

Der in der ersten Druckkammer 40 und im ersten Bremskreis 64 herrschende Druck überträgt sich über den zweiten Druckkolben 56 verzögerungsfrei auf die zweite Druckkammer 26 und den daran angeschlossenen zweiten Bremskreis 70. Während vor einer Koppelung des Füllkolbens 38 mit dem ersten Druckkolben 40 der Druck in den Bremskreisen 64 und 70 nur durch die Pumpe 60 bestimmt wird, ergibt sich nach einer Koppelung der beiden Kolben 38 und 40 der in den Bremskreisen 64 und 70 herrschende Druck aus dem Druckanteil, den die Hydraulikpumpe 60 liefert, und dem Druckanteil, der aus der über die Kolben 38, 40 eingeleiteten Betätigungskraft F resultiert. Das bedeutet, daß zu Beginn einer Bremsbetätigung der Verstärkungsfaktor der Hauptzylinderanordnung 10 größer ist als nach dem Koppeln der beiden Kolben 38 und 40. Da zum Zeitpunkt der Koppelung die Pumpe 60 bereits bremskraftverstärkend tätig ist, ist die ab diesem Zeitpunkt auf den Füllkolben 38 und damit auf das nicht dargestellte Bremspedal zurückwirkende Gegenkraft vom Fahrer nur in reduzierter Form zu spüren.

Zu einer Trennung des Füllkolbens 38 vom ersten Druckkolben 40 kommt es bei der Zurückbewegung (Rückhub) der genannten beiden Kolben, wenn der Ringbund 50 gegen den Ring 48 stößt und somit die Feder 46 auf den ersten Druckkolben 40 wirken kann. Eine hier nicht dargestellte Rückstellfeder drückt daraufhin den Füllkolben 38 zurück in seine Ausgangsstellung und der Abstand s zwischen dem Füllkolben 38 und dem Ringbund 52 des ersten Druckkolbens 40 stellt sich wieder ein.

Eine in der Figur gezeigte, zweite Hydraulikpumpe 60' dient in üblicher Weise dazu, während eines Radschlupfregelbetriebes Druck im zweiten Bremskreis 70 zu erzeugen. Falls gewünscht, kann die hydraulische Verschaltung aber auch so ausgeführt werden, daß auf die zweite Hydraulikpumpe 60' verzichtet werden kann; die Hydraulikpumpe 60 übernimmt dann die Druckerzeugung in beiden Bremskreisen 64 und 70.

Bei der gezeigten und beschriebenen Hauptzylinderanordnung 10 wird die Bremskraftverstärkung mittels der Hydraulikpumpe 60 erreicht, so daß sich die Verwendung eines üblichen Bremskraftverstärkers erübrigt. Wenn die Hauptzylinderanordnung 10 dennoch mit einem hier nicht dargestellten Bremskraftverstärker betrieben werden soll oder wenn die Pumpe 60 defekt ist, wird das Ventil 62 in seine Schließstellung gesteuert, so daß sich auch in der Füllkammer 18 ein Bremsdruck aufbauen kann. Ein Rückschlagventil 76 ermöglicht in diesem Fall ein Überströmen von Fluid aus der Füllkammer 18 in die erste Druckkammer 22. Es kommt dann zu keiner Relativverschiebung zwischen den Kolben 38 und 40 mehr, da sich der Bremsdruck in allen Kammern 18, 22 und 26 synchron aufbaut.

## Patentansprüche

1. Hauptzylinderanordnung (10) für eine hydraulische Fahrzeugbremsanlage, mit
- einem Gehäuse (14) und einer darin längs einer Achse (A) ausgebildeten Bohrung (16), in der wenigstens eine Füllkammer (18) und eine erste Druckkammer (22) begrenzt sind,
- einer Hydraulikpumpe (60), deren Druckseite gepumptes Fluid in einen ersten Bremskreis (64) einspeist,
- einem Füllkolben (38) und einem damit verbundenen, ersten Druckkolben (40), die eine gemeinsame Hauptachse haben und von denen bei einer Verschiebung in druckaufbauender Richtung der Füllkolben (38) Fluid aus der Füllkammer (18) zur Saugseite der Hydraulikpumpe (60) und der erste Druckkolben (40) Fluid aus der ersten Druckkammer (22) in den ersten Bremskreis (64) verdrängt,
**dadurch gekennzeichnet, daß**
- der Füllkolben (38) und der erste Druckkolben (40) um ein begrenztes Maß (s) längs der Achse (A) relativ zueinander bewegbar sind,
- der Füllkolben (38) und der erste Druckkolben (40) in bezug aufeinander federnd so vorgespannt sind, daß sie auseinandergedrängt werden, und daß
- der Füllkolben (38) und der erste Druckkolben (40) starr miteinander koppeln, nachdem sie gegen die sie auseinanderdrängende Federkraft um das Maß (s) aufeinanderzubewegt worden sind.

2. Hauptzylinderanordnung nach Anspruch 1,
**dadurch gekennzeichnet, daß** ein Anschlag (44) eine Ruhestellung des ersten Druckkolbens (40) festlegt, und daß eine in Betätigungsrichtung wirkende Feder (46) den ersten Druckkolben (40) in Richtung dieses Anschlages (44) drängt, sobald der erste Druckkolben (40) aus seiner Ruhestellung entgegen der Betätigungsrichtung verschoben wird.

3. Hauptzylinderanordnung nach Anspruch 2,
**dadurch gekennzeichnet, daß** der Anschlag (44) und die Feder (46) in der ersten Druckkammer (22) angeordnet sind.

4. Hauptzylinderanordnung nach einem der Ansprüche 1 bis 3,
**dadurch gekennzeichnet, daß** eine Feder den Füllkolben (38) entgegen der Betätigungsrichtung vorspannt.

5. Hauptzylinderanordnung nach einem der vorhergehenden Ansprüche,
**dadurch gekennzeichnet, daß** der erste Druckkolben (40) eine kleinere hydraulisch wirksame Fläche als der Füllkolben (38) aufweist.

6. Hauptzylinderanordnung nach einem der vorhergehenden Ansprüche,
**dadurch gekennzeichnet, daß** in der Bohrung (16) eine zweite Druckkammer (26) begrenzt ist, und daß ein zweiter Druckkolben (56) bei einer Verschiebung in druckaufbauender Richtung Fluid aus der zweiten Druckkammer (26) in einen zweiten Bremskreis (70) verdrängt.

7. Hauptzylinderanordnung nach einem der vorhergehenden Ansprüche,
**dadurch gekennzeichnet, daß** die Hydraulikpumpe (60) die Pumpe eines Radschlupfregelsystems ist.

## Claims

1. A master cylinder arrangement (10) for a vehicle hydraulic brake system, comprising
- a housing (14) and a bore (16), which is formed in said housing along an axis (A) and in which at least one filling chamber (18) and a first pressure chamber (22) are delimited,
- a hydraulic pump (60), the discharge end of which delivers pumped fluid into a first brake circuit (64),
- a filling piston (38) and, connected thereto, a first pressure piston (40), which have a common principal axis and of which upon a displacement in pressure build-up direction the filling piston (38) displaces fluid from the filling chamber (18) to the suction side of the hydraulic pump (60) and the first pressure piston (40) displaces fluid from the first pressure chamber (22) into the first brake circuit (64),
**characterized in that**
- the filling piston (38) and the first pressure piston (40) are movable relative to one another by a limited amount (s) along the axis (A),
- the filling piston (38) and the first pressure piston (40) are spring-biased in relation to one another in such a way that they are urged apart, and that
- the filling piston (38) and the first pressure piston (40) couple rigidly to one another after they have been moved towards one another by the amount (s) counter to the spring force urging them apart.

2. The master cylinder arrangement according to claim 1,
**characterized in that** a stop (44) defines an inoperative position of the first pressure piston (40), and that a spring (46) acting in actuating direction presses the first pressure piston (40) in the direction of said stop (44) as soon as the first pressure piston (40) is displaced out of its inoperative position counter to actuating direction.

3. The master cylinder arrangement according to claim 2,
**characterized in that** the stop (44) and the spring (46) are disposed in the first pressure chamber (22).

4. The master cylinder arrangement according to one of claims 1 to 3,
**characterized in that** a spring biases the filling piston (38) counter to actuating direction.

5. The master cylinder arrangement according to one of the preceding claims,
**characterized in that** the first pressure piston (40) has a smaller hydraulically effective area than the filling piston (38).

6. The master cylinder arrangement according to one of the preceding claims,
charaterized in that a second pressure chamber (26) is delimited in the bore (16), and that a second pressure piston (56) upon a displacement in pressure build-up direction displaces fluid from the second pressure chamber (26) into a second brake circuit (70).

7. The master cylinder arrangement according to one of the preceding claims,
**characterized in that** the hydraulic pump (60) is the pump of a wheel slip control system.

## Revendications

1. Dispositif de maître-cylindre (10)- pour une installation de frein hydraulique de véhicule automobile, comportant
- un carter (14) et un alésage (16) réalisé à son intérieur le long d'un axe (A), alésage dans lequel sont délimitées au moins une chambre de remplissage (18) et une première chambre de pression (22),
- une pompe hydraulique (60), dont le côté en pression alimente en fluide pompé un premier circuit de freinage (64),
- un piston de remplissage (38) et un premier piston de pression (40) relié à lui, qui présentent un axe principal commun et dont, lors d'un déplacement dans la direction créant la pression, le piston de remplissage (38) envoie du fluide provenant de la chambre de remplissage (18) vers le côté d'aspiration de la pompe hydraulique (60), et le premier piston de pression (40) envoie du fluide sous pression provenant de la première chambre de pression dans le premier circuit de freinage (64), **caractérisé en ce que**
- le piston de remplissage (38) et le premier piston de pression (40) peuvent se déplacer l'un par rapport à l'autre d'une quantité limitée (s) le long de l'axe (A),
- le piston de remplissage (38) et le premier piston de pression (40) sont soumis, l'un par rapport à l'autre, à une précontrainte par l'effet d'un ressort de manière à être poussé l'un hors de l'autre, et **en ce que**
- le piston de remplissage (38) et le premier piston de pression (40) sont couplés l'un avec l'autre de façon rigide après qu'ils se soient déplacés l'un vers l'autre d'une certain valeur (s) en s'opposant à la force d'un ressort tendant à les pousser l'un hors de l'autre.

2. Dispositif de maître-cylindre suivant la revendication 1,
**caractérisé en ce qu'**une butée (44) détermine une position de repos du premier piston de pression (40), et **en ce qu'**un ressort (46) agissant dans le sens d'actionnement agit sur le premier piston de pression (40) dans la direction de cette butée (44), aussitôt que le premier piston de pression (40) a été déplacé de sa position de repos dans le sens opposé à la direction d'actionnement.

3. Dispositif de maître-cylindre suivant la revendication 2,
**caractérisé en ce que** la butée (44) et le ressort (46) sont disposés dans la première chambre de pression (22).

4. Dispositif de maître-cylindre suivant l'une des revendications 1 à 3,
**caractérisé en ce qu'**un ressort exerce une précontrainte sur le piston de remplissage (38) dans le sens opposé à la direction d'actionnement.

5. Dispositif de maître-cylindre suivant l'une des revendications précédentes,
**caractérisé en ce que** le premier piston de pression (40) présente une surface active hydraulique plus petite que le piston de remplissage (38).

6. Dispositif de maître-cylindre suivant l'une des revendications précédentes,
**caractérisé en ce que**, dans l'alésage (16), est délimitée une deuxième chambre de pression (26), et **en ce qu'**un deuxième piston de pression (56), au cours d'un déplacement dans la direction créant la pression, envoie sous pression du fluide provenant de la deuxième chambre de pression (26) dans un deuxième circuit de freinage (70).

7. Dispositif de maître-cylindre suivant l'une des revendications précédentes, **caractérisé en ce que** la pompe hydraulique (60) est la pompe d'un système de régulation de patinage de roues.
